# EUROPÄISCHE PATENTANMELDUNG

(11) **EP 1 178 378 A1**
(43) Veröffentlichungstag der Anmeldung: **06.02.2002**
(21) Anmeldenummer: 01108569.3
(22) Anmeldetag: 16.10.1998
(51) Int. Cl.: G05B 19/042

(54) **Zigarettenverpackungs- und/oder -herstellungsmaschine**

(30) Priorität: 04.12.1997 DE 19753704
(62) Teilanmeldung aus: 98965632.7
(71) Anmelder: Focke & Co. (GmbH & Co.), 27283 Verden (DE)
(72) Erfinder: Focke, Heinz,, 27283 Verden (DE); Kaluschke, Jörg,, 28832 Achim (DE)
(74) Vertreter: Bolte, Erich, Dipl.-Ing.

(57) **Zusammenfassung**

Die Erfindung betrifft eine Maschine, insbesondere (Zigaretten-)Verpackungs- und/oder Herstellungsmaschine mit einer Schnittstelle (38, 39, 40) zum Datenaustausch zwischen der Maschine (35, 36, 37) und einem angeschlossenen Netzwerk (34, 52, 53). Ferner betrifft die Erfindung eine Maschine, bei der zur Beobachtung von schwer zugänglichen bzw. schwer einsehbaren Bereichen einer komplexen (Verpackungs-/Herstellungs-) Maschine ein visuelles Überwachungsorgan in dem betreffenden Bereich der Verpackungsmaschine angeordnet ist, das über eine Leitung (24) Bilder von dem schwer zugänglichen Bereich der Maschine aufnimmt und über eine Kamera beispielsweise auf einem Bildschirm darstellt.

Außerdem betrifft die Erfindung ein Netzwerk (34, 52, 53) derartiger Maschinen mit einen Rechner (42) zum Überwachen der Funktionen der angeschlossenen Maschinen (35, 36, 37) und/oder einem Rechner (57) zum Durchführen von Wartungs- und/oder Störungsbeseitigungsmaßnahmen an den angeschlossenen Maschinen (35, 36, 37). Ferner betrifft die Erfindung ein Verfahren zum Warten und/oder zur Diagnose von Maschinen (35, 36, 37), bei dem Daten über ein Netzwerk (34, 52, 53) mit einem Diagnose- und/oder Leitstand-Rechner (42) und/oder Service-Rechner (57) ausgetauscht werden.

## Beschreibung

Die Erfindung betrifft eine (Zigaretten-)Verpackungs- und/oder -herstellungsmaschine sowie ein Netzwerk für eine oder mehrere derartiger Maschinen. Schließlich betrifft die Erfindung ein Verfahren zum Warten und/oder zur Diagnose von Zigarettenverpackungs- und/oder -herstellungsmaschinen.

Verpackungsmaschinen, insbesondere Zigaretten-Verpackungsmaschinen, aber auch Zigaretten-Herstellungsmaschinen, sind durch einen sehr komplexen Aufbau gekennzeichnet. Die zusammenwirkenden Einheiten, Aggregate und Organe, insbesondere Faltrevolver, Zigaretten-Magazin, Förderer für Zigaretten und Packungen etc. sind so ausgebildet und relativ zueinander angeordnet, dass die visuelle Erkennung und Überwachung der Bewegungsabläufe sowie der Zustände einzelner Organe durch Maschinenpersonal außerordentlich erschwert ist. Dies führt dazu, dass sich allmählich aufbauende Fehlentwicklungen, insbesondere Verschmutzungen von Organen oder Teilen derselben, nicht immer rechtzeitig erkannt und abgestellt werden können. Femer ist die Wartung, Fehlererkennung und Fehlerbehebung derartiger Maschinen aufgrund ihrer Komplexität aufwendig.

Der Erfindung liegt die Aufgabe zugrunde, die Wartung von derartigen Maschinen zu verbessern und zu erleichtern.

Zur Lösung dieser Aufgabe ist die erfindungsgemäße Zigarettenverpackungs- und/oder -herstellungsmaschine dadurch gekennzeichnet, dass sie eine Schnittstelle zum Datenaustausch zwischen der Maschine und einem anschließbaren Netzwerk und ein maschinenseitigen Audio- und Video-System zum Austausch von Bild- und Tondaten über die Schnittstelle zur Kommunikation einer Bedienperson der Maschine mit einer weiteren Person über ein ebenfalls an das Netzwerk angeschlossenes, weiteres Audio- und Video-System aufweist, wobei beide Audio- und Video-Systeme je ein Mikrophon aufweisen, das maschinenseitige Audio- und Video-System eine Kamera und das weitere Audio- und Video-System einen Bildschirm aufweist.

Das erfindungsgemäße System der Vernetzung von derartigen Maschinen, hat den Vorteil, dass außerhalb der eigentlichen Produktionsstätten an ebenfalls an das Netzwerk angeschlossenen Rechnern Maßnahmen durchgeführt werden können, die unmittelbar auf die Maschine einwirken. Beispielsweise können Maschinendaten von einem Leitstand- bzw. Diagnoserechner abgefragt werden, der sich in beliebiger Ferne von der Maschine befinden kann. Von einem derartigen Leitstand- bzw. Diagnoserechner können aber auch nicht nur Daten der Maschine abgefragt, sondern auch neue Daten in die Maschine eingespeist werden. Dies kann insbesondere bei Software-Aktualisierungen von Interesse sein. Schließlich lassen sich von einem derartigen Leitstand- bzw. Diagnoserechner auch Steuerungsmaßnahmen an der Maschine vornehmen. Bevorzugt kann dabei eine an der Maschine angebrachte Kamera verschwenkt werden und bestimmte Maschinenbereiche heranzoomen. Eine derartige Kameraverstellung kann manuell, insbesondere vom Leitstand- bzw. Diagnoserechner, aber auch besonders bevorzugt automatisch erfolgen nach Maßgabe einer von einem an der Maschine angebrachten Sensor abgegebenen Störungsmeldung der Maschine.

Insbesondere lässt sich aber auch mittels einer an der Maschine angebrachten Kamera eine Videokonferenz mit dem Leitstand- bzw. Diagnoserechner schalten. Dabei weist dieser Leitstand- bzw. Diagnoserechner ebenfalls bevorzugt eine entsprechende Kamera auf.

Das Netzwerk kann aber auch eine Verbindung "nach außen" aufweisen. So kann beispielsweise über ein WAN (Wide Area Network) bzw. ein Langstreckennetzwerk eine Verbindung zu einem beispielsweise beim Maschinenhersteller aufgestellten Rechner geschaffen werden. Dieser Rechner ist bevorzugt ein sogenannter Service-Rechner. Er weist ebenfalls die Möglichkeit auf, eine Videokonferenz zu schalten. Außerdem kann mittels dieses Service-Rechners entsprechend dem Leitstand- bzw. Diagnoserechner in die Maschine eingegriffen werden.

Auf diese Weise kann eine Wartung oder Störungsbeseitigung von nahezu beliebiger Entfernung aus durchgeführt werden. So ist es beispielsweise möglich, dass eine Maschine in Japan aufgestellt ist, während die die Wartung durchführende Person an einem Service-Rechner in Deutschland sitzt.

Alle diese Vorteile lassen sich dadurch realisieren, dass die eingangs genannten Maschinen mittels einer entsprechenden Schnittstelle an ein Netzwerk angeschlossen sind bzw. dass gemäß dem erfindungsgemäßen Verfahren Daten über das Netzwerk mit dem Diagnose- bzw. Leitstand-Rechner und/oder dem Service-Rechner ausgetauscht werden.

Im Zusammenhang mit der Erfindung ist unter "Netzwerk" ein Netzwerk mit einer oder mehreren Maschinen sowie insbesondere wenigstens einem Rechner zu verstehen.

Weitere Einzelheiten der Erfindung werden nachfolgend anhand der in den Zeichnungen dargestellten Ausführungsbeispiele näher erläutert. Es zeigt:
- Fig. 1: eine Verpackungsmaschine bzw. Teile derselben als bevorzugtes Anwendungsbeispiel in schematischer Seitenansicht,
- Fig. 2: eine Einzelheit der Verpackungsmaschine gemäß Fig. 1 als Ausschnitt in stark vergrößertem Maßstab,
- Fig. 3: ein optisches Überwachungsorgan für eine Verpackungsmaschine gemäß Fig. 1 und Fig. 2,
- Fig. 4: einen Querschnitt durch eine Leitung des Überwachungsorgans gemäß Fig. 3, in vergrößertem Maßstab,
- Fig. 5: einen Bildschirm mit der vergrößerten Darstellung eines von dem Überwachungsorgan gemäß Fig. 3 aufgenommenen Details,
- Fig. 6: ein Netzwerk bestehend aus einem lokalen Netzwerk mit mehreren Verpackungs- bzw. Herstellungsmaschinen sowie einem WAN zum Verwenden des lokalen Netzwerkes mit einem Service-Rechner.

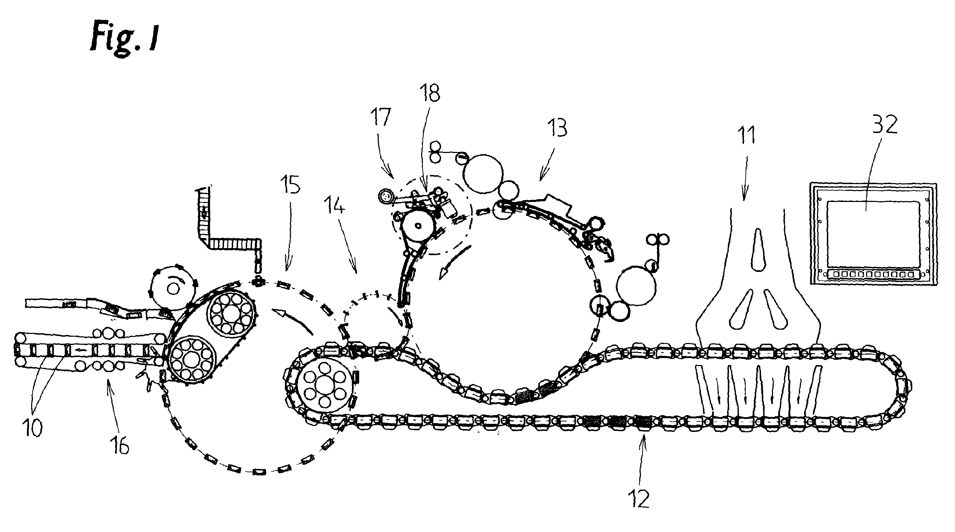

Das in den Zeichnungen dargestellte - bevorzugte - Ausführungsbeispiel befasst sich mit einer Verpackungsmaschine, konkret mit einer Zigaretten-Verpackungsmaschine für die Fertigung von Zigarettenpackungen 10 des Typs Weichbecher. In Fig. 1 ist in vereinfachter Seitenansicht der Aufbau der Verpackungsmaschine gezeigt. Diese besteht danach aus einem Zigaretten-Magazin 11, einer Taschenkette 12 zum Transport von Zigarettengruppen und einem Faltrevolver 13. Dieser ist über einen Übergaberevolver 14 mit einem Trockenrevolver 15 verbunden. In dessen Bereich verweilen die fertiggestellten Zigarettenpackungen 10 für eine gewisse Dauer, damit Leimstellen aushärten können. Die fertigen Zigarettenpackungen 10 werden über einen Abförderer 16 abtransportiert. Einzelheiten der Verpackungsmaschine ergeben sich aus US 4 735 032 sowie aus US 4 852 335.

Die Verpackungsmaschine weist eine Vielzahl von Bereichen auf, die während des Betriebes einer Materialabnutzung, unerwünschten Fehlstellungen von Organen oder Verschmutzungen ausgesetzt sein können. Die unmittelbare visuelle Überwachung und Kontrolle vieler Bereiche ist durch das Bedienungspersonal der Verpackungsmaschine nicht oder nur mit großem Aufwand möglich.

Als Beispiel für einen derartigen kritischen und überwachungsbedürftigen Bereich der Verpackungsmaschine ist ein dem Faltrevolver 13 zugeordnetes Aggregat ausgewählt, nämlich ein im Bereich einer Leimstation 17 wirkendes Leimaggregat 18. Dieses ist ortsfest unmittelbar neben der kreisförmigen Bewegungsbahn des Faltrevolvers 13 bzw. der Zigarettenpackungen 10 positioniert. Aufgabe des Leimaggregats 18 ist es, Leim auf bestimmte Faltlappen der Zigarettenpackung 10 aufzubringen, und zwar insbesondere punktförmige Leimbilder. Wegen der Einzelheiten über Aufbau und Funktion des Leimaggregats 18 wird auf DE 196 48 445.6 verwiesen.

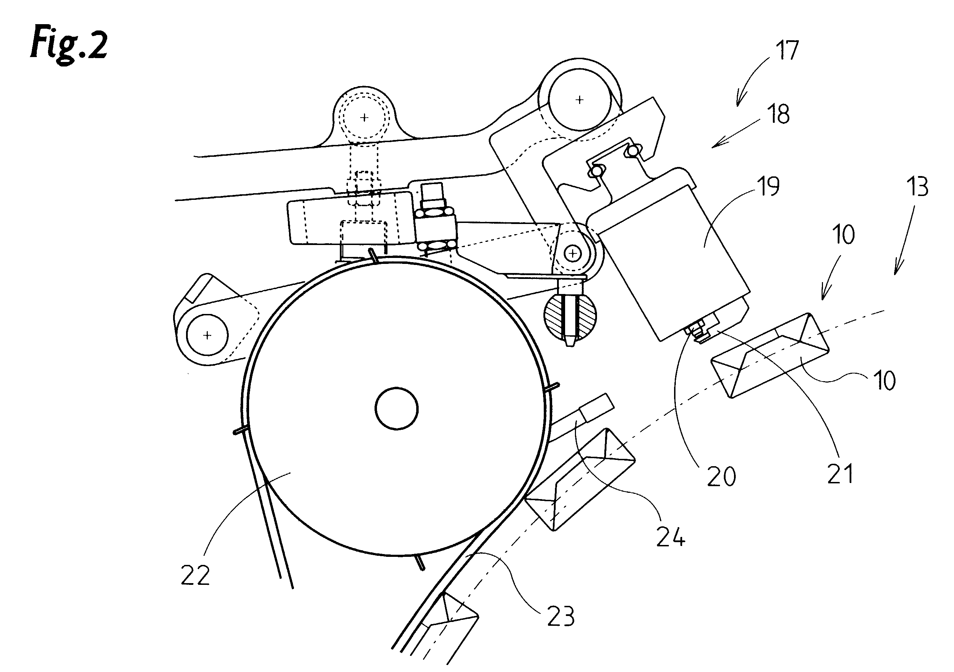

Das Leimaggregat 18 weist eine oder mehrere Leimdüsen 19 auf. Die Leimdüse 19 ist im vorliegenden Falle so ausgebildet, dass an der dem Faltrevolver 13 bzw. den Zigarettenpackungen 10 zugekehrten Seite ein Düsenkopf 20 oder mehrere in Axialrichtung des Faltrevolvers nebeneinanderliegende Düsenköpfe 20 angeordnet sind. Aus diesen tritt der Leim portionsweise aus. In Fig. 2 ist eine zurückgezogene Position der Leimdüse 19 gezeigt, in der der Düsenkopf 20 durch ein Verschlussorgan 21 verschlossen ist.

Der Bereich des Leimaggregats 18 bzw. der Düsenköpfe 20 ist aufgrund der Gestaltung der Verpackungsmaschine nicht unmittelbar einsehbar. So ist ein Bereich beispielsweise verdeckt durch eine drehend angetriebene Umlenkwalze 22 für Stützgurte 23, die in einem Umfangsbereichs des Faltrevolvers 13 außen an den Zigarettenpackungen 10 anliegen. Die Umlenkwalze 22 bzw. die Stützgurte 23 behindern den Einblick zur Leimdüse 19.

Um gleichwohl eine visuelle Überwachung dieses sensiblen Organs zu ermöglichen, ist in diesem Bereich ein Fernüberwachungsorgan installiert. Dieses besteht aus einer geeigneten Kamera (nicht gezeigt) und einer dem zu überwachenden bzw. einzusehenden Bereich zugeordneten Optik. Diese ist demnach von der eigentlichen Kamera entfernt. Die von der Optik aufgenommenen Bilder werden über eine Leitung zur Kamera geführt und damit in Bilder umgesetzt.

Bei dem vorliegenden Ausführungsbeispiel führt eine Leitung 24 zu dem zu überwachenden Bereich, im vorliegenden Falle also in die Nähe des Leimaggregats 18 bzw. der Leimdüsen 19. Die Leitung 24 bildet am freien Ende ein Objektiv, im einfachsten Falle das freie Ende von Lichtleitkabeln. Bei dem vorliegenden Ausführungsbeispiel hat die Leitung 24 eine Mehrfachfunktion. In einer äußeren Umhüllung 25 sind mehrere, im vorliegenden Falle drei Lichtleitkabel mit unterschiedlichen Funktionen vorgesehen. Ein (im Durchmesser größerer) Aufnahmestrang 26 erfasst mit einem am freien Ende gebildeten Objektiv bzw. mit der Endfläche von Lichtleitfasern, insbesondere Glasfasersträngen, das aufzunehmende Bild. Des weiteren sind in der gemeinsamen Umhüllung 25 zwei Lichtleitkabel 27, 28 untergebracht. Diese bestehen ebenfalls vorzugsweise aus Glasfasersträngen. Die Lichtleitkabel 27, 28 sind an eine Lichtquelle angeschlossen und dienen zum Ausleuchten des zu überwachenden Bereichs, also im vorliegenden Falle des Bereichs der Düsenköpfe 20.

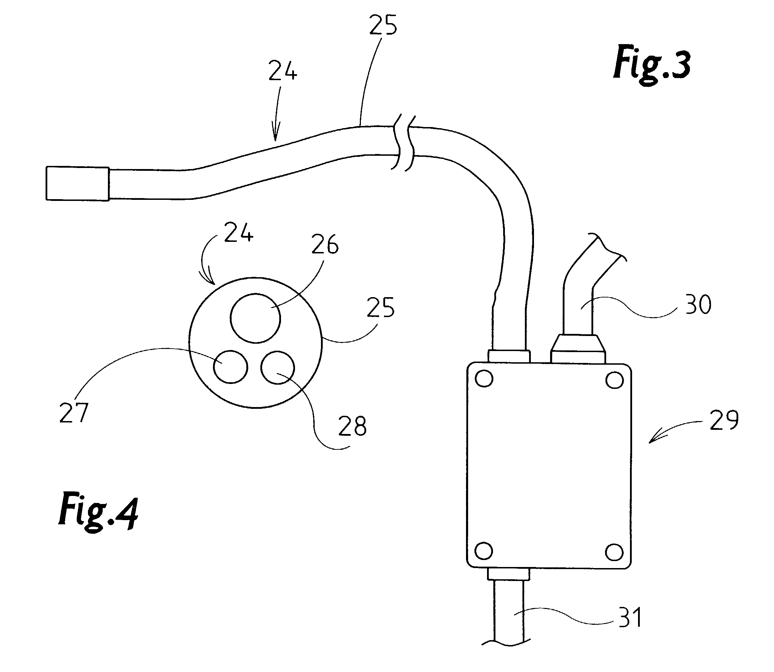

Die Leitung 24 ist an eine Einheit 29 angeschlossen, von der in Fig. 3 lediglich das Gehäuse gezeigt ist. Die Einheit 29 dient im vorliegenden Falle zur Überleitung der aufgenommenen Bilder über eine Anschlussleitung 30 an die (nicht gezeigte) Kamera oder an eine andere Bild- bzw. Signal-Auswerteeinheit. Die Einheit 29 kann auch dazu dienen, die aufgenommenen Bilder in elektrische Signale umzuwandeln, beispielsweise über einen CCD-Empfänger. Weiterhin ist an die Einheit 29 eine Verbindungsleitung 31 zu einer Lichtquelle (nicht gezeigt) angeschlossen.

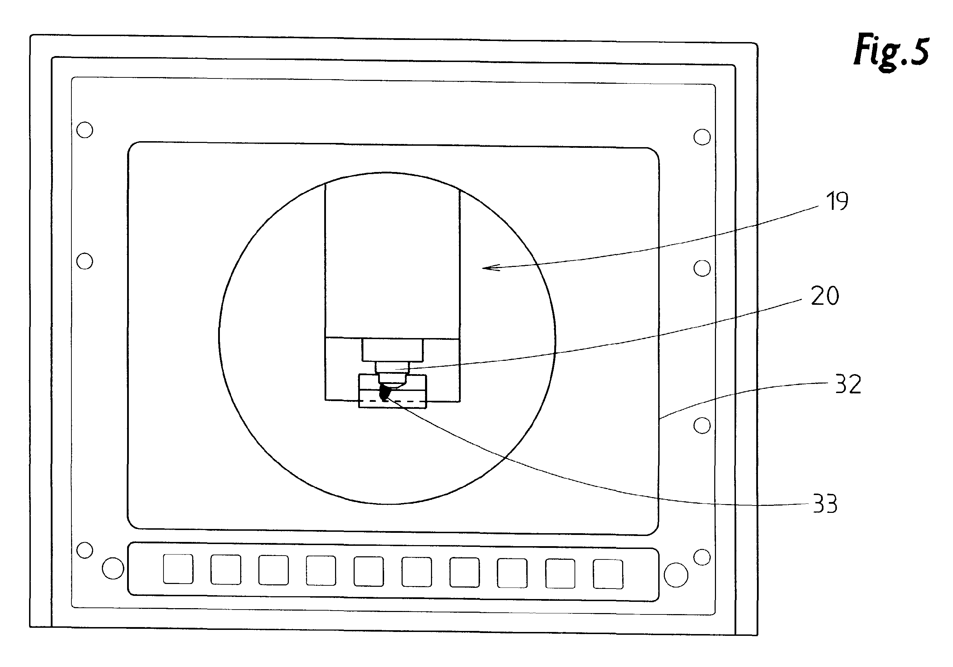

Die von der Kamera aufgenommenen Bilder des beobachteten Bereichs können auf einem Bildschirm 32 eines der Verpackungsmaschine zugeordneten Monitors dargestellt werden, und zwar vorzugsweise als Bildausschnitt in Vergrößerung. Fig. 5 zeigt als Beispiel das Leimaggregat 18 bzw. den vergrößerten Düsenkopf 20 mit einer seitlichen unerwünschten Leimablagerung 33. Diese ist für die Maschinenbedienung ein Hinweis darauf, dass im Bereich des Leimaggregats 18 ein kritischer Zustand im Entstehen ist.

Die beschriebene optische Überwachungs- bzw. Beobachtungseinrichtung ermöglicht die Erzeugung von Standbildern, beispielsweise zur Kontrolle von schnell ablaufenden Bewegungen beim Falten von Zuschnitten. Die Standbilder können durch Anwendung des an sich bekannten Stroboskopeffekts erzeugt werden. Zu diesem Zweck wird über die Lichtquelle und die Lichtleitkabel 27, 28 eine pulsierende Ausleuchtung des zu beobachtenden Bereichs geschaffen, und zwar im Bewegungstakt der Maschine. Wenn diese mit einer Leistung von zum Beispiel 700 Takten pro Minute arbeitet, müssen entsprechend 700 Lichttakte in dem zu beobachtenden Bereich erzeugt werden.

Die Leitung 24 ist zweckmäßigerweise durch entsprechende Ausgestaltung der Umhüllung 25 und der Stränge bzw. Kabel 26, 27 und 28 formbar ausgebildet, so dass die erwünschte Relativstellung durch bloßes Verformen gebildet werden kann.

In vielen verpackungsrelevanten Bereichen sind Sensoren angebracht, die Störungen erkennen. Falls ein derartiger Bereich nicht von einer Bedienperson einsehbar ist, weist die Maschine eine Kamera, beispielsweise in Form der beschriebenen optischen Überwachungs- bzw. Beobachtungseinrichtung auf, welche diesen Bereich überwacht. Wenn dann in diesem Bereich eine Störung auftritt, wird automatisch ein Bild dieses Bereichs von der Kamera bzw. der beschriebenen optischen Überwachungs- bzw. Beobachungseinrichtung aufgenommen und auf einem Bildschirm angezeigt. Dabei wird - falls das Licht in diesem Bereich der Störung nicht ausreicht - mit den Lichtquellen der Kamera dieser Bereich zusätzlich ausgeleuchtet.

Beispielsweise ermittelt ein Sensor einen Fehler derart, dass in unbefriedigender Weise Leim auf einen Zuschnitt aufgebracht worden ist. Dann wird die Kamera bzw. das optische Überwachungs- bzw. Beobachtungsorgan eingeschaltet, ggf. einschließlich der zugeordneten Lichtquellen, so dass ein Bild bzw. Bilder von diesem Bereich aufgenommen werden können. Diese Bilder gelangen sodann auf den erwähnten Bildschirm.

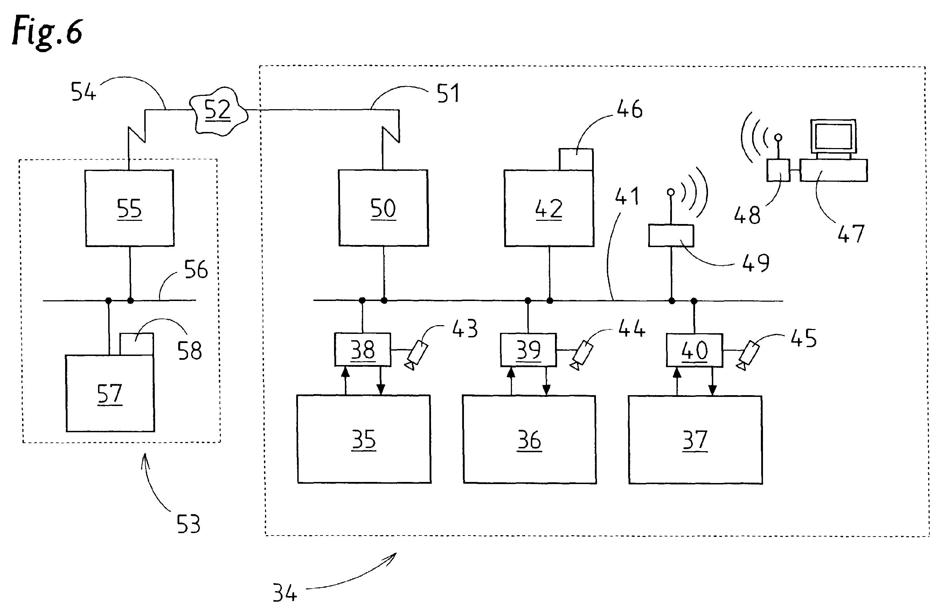

Fig. 6 zeigt ein lokales Netzwerk 34. Dieses Netzwerk 34 ist beispielsweise bei einem Zigarettenhersteller aufgebaut. Es weist mehrere Maschinen 35, 36, 37 auf. Bei diesen Maschinen 35, 36, 37 handelt es sich um Zigarettenverpackungs- und/oder Herstellungsmaschinen.

Jede dieser Maschinen 35, 36, 37 weist eine Steuerungseinrichtung 38, 39, 40 auf zur Steuerung der Maschinen 35, 36, 37. Die Steuerung bildet eine Schnittstelle zu einem Netzwerkkabel 41 des lokalen Netzwerkes 34. Auf diese Weise sind alle Maschinen 35, 36, 37 an ein gemeinsames Netzwerkkabel 41 angeschlossen.

Die Steuerungseinrichtungen 38, 39, 40 der Maschinen 35, 36, 37 bilden - wie gesagt - eine Schnittstelle der Maschine mit dem Netzwerkkabel 41 des lokalen Netzwerks 34. Über diese Schnittstelle werden Daten bidirektional mit den Maschinen 35, 36, 37 ausgetauscht. Auf diese Weise können nicht nur Daten aus der Maschine ausgelesen werden, sondern man kann auch von außen in die Maschine eingreifen.

An das Netzwerkkabel 41 sind des weiteren ein Leitstand- und Diagnoserechner 42 angeschlossen. An diesem Leitstand- und Diagnoserechner 42 kann ein Bediener an einzelnen oder mehreren Maschinen 35, 36, 37 gleichzeitig Wartungs-, Diagnose- und Störungsbeseitigungsmaßnahmen vornehmen. Beispielsweise kann der Bediener Maschinendaten abfragen und somit feststellen, wie viele Einheiten (Packungen oder Zigaretten) innerhalb einer Schicht oder eines sonstigen Zeitabschnitts hergestellt worden sind. Der Bediener kann aber auch Vorgaben für die Maschinen 35, 36, 37 machen, beispielsweise derart, dass eine bestimmte Anzahl von Einheiten innerhalb eines bestimmten Zeitabschnitts produziert werden soll. Mittels des Leitstand- und Diagnoserechners 42 kann man auch aktualisierte Software in die Maschinensteuerungen 38, 39, 40 einspielen. Von diesem Rechner 42 kann der Bediener aber auch Maschinenzustände abfragen. Beispielsweise erhält er auf diese Weise Informationen über Störungen. Er kann dann von dem Leitstand- und Diagnoserechner 42 Maßnahmen ergreifen, um derartige Störungen zu beseitigen. Es kann nämlich vorkommen, dass eine Störung auch ohne entsprechende Handgriffe vor Ort gewissermaßen von Ferne aus behoben werden kann.

Sollte eine Störung jedoch nicht von Ferne aus behoben werden können, bietet ein an jeder Maschine installiertes Videokonferenzsystem 43, 44, 45 und ein entsprechendes Videokonferenzsystem 46 am Leitstand- und Diagnoserechner 42 den Bedienern am Leitstand- und Diagnoserechner 42 und der jeweiligen Maschine 35, 36, 37 die Möglichkeit einer audio-visuellen Kommunikation. Diese Videokonferenzsysteme 43, 44, 45, 46 weisen jeweils ein Mikrofon und eine Kamera auf. Insbesondere erlaubt ein derartiges Videokonferenzsystem auch die Übertragung von Bildern der Maschine 35, 36, 37 auf einen Bildschirm des Leitstand- und Diagnoserechners. Dieser Bediener muss dann nämlich nicht erst zur Maschine gehen, um die betreffende Störung vor Ort in Augenschein zu nehmen. Vielmehr kann der Bediener vom Leitstand- und Diagnoserechner 42 aus geeignete Maßnahmen treffen, um eine aufgetretene Störung zu beseitigen. Falls dazu Handgriffe nötig sind, weist er den Bediener der Maschine 35, 36, 37 an, diese auszuführen.

Mit den Steuerungseinrichtungen 38, 39, 40 der Maschine 35, 36, 37 sind auch Einheiten 29 verbunden, die Bilder von Bereichen liefern, die von einer Bedienperson nicht unmittelbar einsehbar sind. Auch diese Bilder können über das Netzwerk 34 an den Leitstand- und Diagnoserechner 42 übertragen werden.

Für weitere Diagnosemaßnahmen ist ein weiterer mobiler Rechner 47, beispielsweise ein Laptop vorgesehen. Dieser mobile Rechner 47 weist eine Sende- und Empfangseinrichtung 48 zum Betreiben einer drahtlosen Verbindung mit dem Netzwerk 34 auf. Über eine weitere mit dem Netzwerkkabel 41 des lokalen Netzwerks 34 verbundene drahtlose Sende- und Empfangseinrichtung 49 kann der mobile Rechner 47 mit dem lokalen Netzwerk 34 kommunizieren. Von diesem mobilen Rechner 47 aus können dann die gleichen Funktionen ausgeführt werden wie von dem Leitstand- und Diagnoserechner 42. Dies erhöht die Flexibilität von Wartungs- und Diagnosemaßnahmen. Der für die Wartung und Diagnose zuständige Bediener kann auf diese Weise von jedem beliebigen Arbeitsplatz bzw. Ort seine Arbeit verrichten. Insbesondere kann er in schwierigen Fällen, wenn doch die Maschine 35, 36, 37 vor Ort in Augenschein nehmen muss, den mobilen Rechner 47 mitnehmen und vor Ort einsetzen. Dies hat den Vorteil, dass dieser Bediener seine gewohnte Rechnerumgebung beibehalten kann.

Neben dem mobilen Rechner 47, der über eine Sende- und Empfangseinrichtung 48 mit einer weiteren Sende- und Empfangseinrichtung 49 mit dem Netzwerkkabel für eine drahtlose Verbindung verbunden ist, können auch die Maschinen 35, 36, 37 bzw. ihre Steuerungen 38, 39, 40 über drahtlose Sende- und Empfangseinrichtungen verbunden werden.

Femer ist mit dem Netzwerkkabel 41 ein sogenannter Server 50 verbunden. Auf diesem Server 50 ist eine Datenbank mit Daten des gesamten Netzwerks 34 einschließlich aller seiner zuvor beschriebenen Komponenten implementiert. Außerdem dient der Server 50 der Kommunikation mit externen Netzen.

Über eine Verbindung 51 ist der Server 50 und damit das gesamte Netzwerk 34 mit einem WAN (Wide Area Network) 52 bzw. Langstreckennetzwerk verbunden. Diese Verbindung besteht beispielsweise aus einer Modem-, ISDN-, Funk- und/oder Satellitenverbindung. Bei dem WAN 52 handelt es sich beispielsweise um das Internet (bzw. WWW, d.h. World Wide Web) oder auch andere größere firmeninterne Netzwerke.

Ebenfalls an das WAN 52 ist ein weiteres lokales Netzwerk 53 angeschlossen, und zwar ebenfalls über eine Verbindung 54, die eine Verbindung gemäß der Verbindung 51 sein kann.

Das lokale Netzwerk 53 weist ebenfalls einen Netzwerk-Server 55 auf, welcher über ein Netzwerkkabel 56 eine Verbindung zu weiteren Netzwerkrechnern herstellt. Der Server 55 entspricht im wesentlichen dem Server 50, so dass insoweit auf den Server 50 Bezug genommen wird. Insbesondere weist der Server 55 ebenfalls eine Datenbank sowie Kommunikationsmittel auf, um eine Kommunikation des lokalen Netzwerkes 53 mit dem WAN 52 zu ermöglichen. Das Netzwerkkabel 56 schafft eine Verbindung zu dem Service-Rechner 57, welcher ebenfalls mit einem Videokonferenzsystem 58 ausgestattet ist.

Der Service-Rechner 57 bietet die gleichen Funktionen wie der Leitstand- und Diagnoserechner 42, so dass insofern auf diesen Leitstand- und Diagnoserechner 42 Bezug genommen wird. Der Service-Rechner 57 bietet jedoch zusätzlich gegenüber dem Leitstand- und Diagnoserechner 42 die Möglichkeit über sehr weite Entfernung, nämlich im wesentlichen soweit das WAN reicht, mit den Maschinen 35, 36, 37 zu kommunizieren und ggf. in diese Maschinen einzugreifen.

### Bezugszeichenliste:

- 10: Zigarettenpackung
- 11: Zigaretten-Magazin
- 12: Taschenkette
- 13: Faltrevolver
- 14: Übergaberevolver
- 15: Trockenrevolver
- 16: Abförderer
- 17: Leimstation
- 18: Leimaggregat
- 19: Leimdüse
- 20: Düsenkopf
- 21: Verschlussorgan
- 22: Umlenkwalze
- 23: Stützgurt
- 24: Leitung
- 25: Umhüllung
- 26: Aufnahmestrang
- 27: Lichtleitkabel
- 28: Lichtleitkabel
- 29: Einheit
- 30: Anschlussleitung
- 31: Verbindungsleitung
- 32: Bildschirm
- 33: Leimablagerung
- 34: lokales Netzwerk
- 35: Maschine
- 36: Maschine
- 37: Maschine
- 38: Steuerungseinrichtung
- 39: Steuerungseinrichtung
- 40: Steuerungseinrichtung
- 41: Netzwerkkabel
- 42: Leitstand- und Diagnoserechner
- 43: Video-Konferenzsystem
- 44: Video-Konferenzsystem
- 45: Video-Konferenzsystem
- 46: Video-Konferenzsystem
- 47: mobiler Rechner
- 48: Sende- und Empfangseinrichtung
- 49: Sende- und Empfangseinrichtung
- 50: Server
- 51: Verbindung
- 52: WAN
- 53: lokales Netzwerk
- 54: Verbindung
- 55: Server
- 56: Netzwerkkabel
- 57: Service-Rechner
- 58: Video-Konferenzsystem

## Patentansprüche

1. Zigarettenverpackungs- und/oder -herstellungsmaschine, **dadurch gekennzeichnet, dass** sie eine Schnittstelle (38, 39, 40) zum Datenaustausch zwischen der Maschine (35, 36, 37) und einem anschließbaren Netzwerk (34, 52, 53) und ein maschinenseitigen Audio- und Video-System (43-45) zum Austausch von Bild- und Tondaten über die Schnittstelle (38, 39, 40) zur Kommunikation einer Bedienperson der Maschine (35, 36, 37) mit einer weiteren Person über ein ebenfalls an das Netzwerk (34, 52, 53) angeschlossenes, weiteres Audio- und Video-System (46, 58) aufweist, wobei beide Audio- und Video-Systeme (43-46, 58) je ein Mikrophon aufweisen, das maschinenseitige Audio- und Video-System (43-45) eine Kamera und das weitere Audio- und Video-System (46, 58) einen Bildschirm aufweist.

2. Maschine nach Anspruch 1, **gekennzeichnet durch** eine Steuerung, die derart ausgelegt ist, dass über die Schnittstelle Maschinendaten, insbesondere Produktionsdaten, und/oder Maschinensteuerungsprogramme, insbesondere zur Softwareaktualisierung, und/oder Bilddaten eines optischen Überwachungs- bzw. Beobachtungsorgan austauschbar sind.

3. Maschine nach Anspruch 1 oder 2, **gekennzeichnet durch** eine Sende- und Empfangseinrichtung zum drahtlosen Anschließen der Maschine an das Netzwerk (34, 36, 37).

4. Netzwerk, **gekennzeichnet durch** eine oder mehrere Zigarettenverpackungs- und/oder herstellungsmaschine (35, 36, 37) nach einem der vorherigen Ansprüche und
a) einen Leitstand- und/oder Diagnoserechner (42) zur Überwachung der Funktionen der angeschlossenen Maschinen (35, 36, 37) und/oder
b) einen Service-Rechner (57) zum Durchführen von Wartungs- und/oder Störungsbeseitigungsmaßnahmen an den angeschlossenen Maschinen (35, 36, 37).

5. Netzwerk nach Anspruch 4, **dadurch gekennzeichnet, dass** das Netzwerk ein LAN (Local Area Network) (34, 53) bzw. ein lokales Netzwerk, insbesondere ein Intranet, und/oder ein WAN (Wide Area Network) (52) bzw. ein Langstreckennetzwerk, insbesondere Internet, aufweist.

6. Netzwerk nach einem der Ansprüche 4 oder 5, **dadurch gekennzeichnet, dass** das Netzwerk (34, 52, 53) eine oder mehrere Modem-, ISDN-, Funk- und/oder Satellitenverbindungen aufweist.

7. Verfahren zum Warten und/oder zur Diagnose von Zigarettenverpackungs- und/oder -herstellungsmaschinen (35, 36, 37) nach einem der Ansprüche 1 bis 6, **dadurch gekennzeichnet, dass** Daten, insbesondere Ton- und Bilddaten und/oder Maschinendaten, über ein Netzwerk (34, 52, 53) nach einem der Ansprüche 12 bis 14 mit einem Diagnose- und/oder Leitstand-Rechner (42) und/oder Service-Rechner (57) ausgetauscht werden.
